# EUROPÄISCHE PATENTSCHRIFT

(11) **EP 4 188 578 B1**
(45) Veröffentlichungstag und Bekanntmachung des Hinweises auf die Patenterteilung: **24.04.2024**
(21) Anmeldenummer: 21758057.0
(22) Anmeldetag: 26.07.2021
(51) Int. Cl.: B01D 45/08, H01M 8/04119

(54) **FLÜSSIGKEITSABSCHEIDER**
LIQUID SEPARATOR
SÉPARATEUR DE LIQUIDE

(30) Priorität: 27.07.2020 DE 102020004533
(43) Veröffentlichungstag der Anmeldung: 07.06.2023
(73) Patentinhaber: cellcentric GmbH & Co. KG, 73230 Kirchheim unter Teck (DE)
(72) Erfinder: KIBLER, Michael, 73230 Kirchheim unter Teck (DE); WISSHAK, Peter, 73230 Kirchheim unter Teck (DE); SCHMALZRIEDT, Sven, 73230 Kirchheim unter Teck (DE); MATHEIS, Alexander, 73230 Kirchheim unter Teck (DE); STARK, Tobias, 73230 Kirchheim unter Teck (DE); BAUMGARTL, Peter, 87746 Erkheim (DE)
(74) Vertreter: Platzöder, Michael Christian
(86) Internationale Anmeldenummer: PCT/EP2021/070779
(87) Internationale Veröffentlichungsnummer: WO 2022/023231

(56) Entgegenhaltungen:
- EP-A1- 2 905 158
- DE-A1- 3 109 240
- DE-A1-102007 023 417
- DE-A1-102012 023 682
- KR-A- 20150 101 201
- KR-A- 20190 110 832

## Beschreibung

Die Erfindung betrifft einen Flüssigkeitsabscheider für einen mit Flüssigkeit beladenen Gasstrom, nach der im Oberbegriff von Anspruch 1 näher definierten Art. Außerdem betrifft die Erfindung die Verwendung eines solchen Flüssigkeitsabscheiders.

Flüssigkeitsabscheider oder Wasserabscheider sind prinzipiell aus dem Stand der Technik bekannt. Diese weisen typischerweise Prallelemente auf, an denen ein mit Flüssigkeit beladener Gasstrom seine Strömungsrichtung schlagartig ändert, sodass die Flüssigkeit abgeschieden wird und beispielsweise aufgrund der Schwerkraft an den Prallplatten nach unten läuft. Ein entsprechendes Beispiel ist in der DE 31 09 240 A1 gezeigt.

Flüssigkeitsabscheider werden nun häufig in Brennstoffzellensystemen eingesetzt, in denen es wichtig ist, Wasser aus den Abgasen der Brennstoffzelle abzuscheiden, weil dieses Wasser, welches typischerweise Produktwasser der Brennstoffzelle ist, aufgrund seiner Reinheit sehr leicht einfriert. Dies kann dann bereits bei Temperaturen um den Gefrierpunkt zu Problemen, insbesondere zu Startproblemen von Brennstoffzellen, führen, da Komponenten und/oder Strömungswege durch Eis blockiert sein können. In diesem Zusammenhang beschreibt beispielsweise die DE 10 2007 023 417 A1 einen Wasserabscheider, bei dem über Wärmeleitelemente, welche mit elektrischen Heizelementen verbunden sind, die Möglichkeit besteht, den Wasserabscheider bei Bedarf zu beheizen und aufzutauen.

Ein solches Auftauen bei Bedarf stellt zwar die Funktionalität des Aufbaus sicher, ist jedoch konstruktiv aufwändig und verursacht typischerweise einen zusätzlichen elektrischen Energiebedarf, welcher sich auf die Gesamtenergiebilanz eines solchen Systems nachteilig auswirkt.

Aus der DE 10 2007 023 417 A1 sind Vorrichtungen bekannt, die eine Funktionalität eines Brennstoffzellensystems in Fahrzeugen auch bei Temperaturen unter dem Gefrierpunkt gewährleisten sollen, wobei hierzu elektrische Heizelemente insbesondere im Bereich des Kondensatableiters der Brennstoffzelle so angeordnet sind, dass vorhandenes Eis lokal in der Weise erwärmt wird, dass sich ein oder mehrere Schmelzkanäle bilden, durch die nach sehr kurzem Auftauvorgang bereits Wasser fließen kann, wodurch eine Zirkulation des Reaktionswassers sehr frühzeitig gewährleistet ist, da nicht das gesamte vorhandene Eis aufgeschmolzen werden muss.

Weiterer Stand der Technik ist den Druckschriften DE 10 2012 023 682 A1, DE 31 09 240 A1, EP 2 905 158 A1, KR 2015 0101201 A und KR 2019 0110832 A offenbart.

Die Aufgabe der vorliegenden Erfindung besteht deshalb darin, einen verbesserten Flüssigkeitsabscheider anzugeben, welcher diese Nachteile vermeidet, und welcher einen hocheffizienten Betrieb mit einer reduzierten Gefahr der Eisbildung, zumindest während des Betriebs, gewährleistet.

Erfindungsgemäß wird diese Aufgabe durch einen Flüssigkeitsabscheider mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen. Im Anspruch 10 ist außerdem eine besonders bevorzugte Verwendung eines solchen Flüssigkeitsabscheiders angegeben.

Der erfindungsgemäße Flüssigkeitsabscheider umfasst ein inneres Volumen mit wenigstens einem Prallelement, so wie es auch im Stand der Technik der Fall ist. Zusätzlich zu dem Prallelement ist in dem Volumen ein Sammelbereich für die abgeschiedene Flüssigkeit angeordnet, typischerweise so, dass dieser Sammelbereich im bestimmungsgemäßen Einsatz in Richtung der Schwerkraft unterhalb des Prallelements liegt oder sich in dessen unterem Bereich befindet, sodass durch die Hilfe der Schwerkraft die abgeschiedene Flüssigkeit in den Sammelbereich gelangt.

Erfindungsgemäß ist es nun vorgesehen, dass in dem Sammelbereich ein Wärmeleitelement aus einem gut wärmeleitenden Material angeordnet ist. In Richtung des Prallelements ragt dieses in die Gasströmung in dem Volumen. Das Prallelement selbst ist dabei aus einem die Wärme schlechter als das Wärmeleitelement leitenden Material ausgebildet. Dies führt nun dazu, dass an dem Prallelement, wie in einem üblichen Flüssigkeitsabscheider die Flüssigkeit abgeschieden wird. Sie tropft dann beispielsweise der Schwerkraft folgend nach unten und tropft oder fließt in einen Sammelbereich. In dem Sammelbereich befindet sich in Kontakt mit der Flüssigkeit ein Wärmeleitelement, welches aus dem Sammelbereich heraus in Richtung der Gasströmung und damit in Richtung des Prallelements ragt. Die Funktionalität ist nun die, dass Flüssigkeit beim Auftreffen der mit Flüssigkeitströpfchen beladenen Strömung auf das Prallelement abgeschieden wird und nach unten abtropft. Aufgrund der eher schlechten Wärmeleitfähigkeit des Prallelements bleibt die Flüssigkeit, welche abgeschieden worden ist, relativ warm. Im Anschluss strömt der von seinen flüssigen Tröpfchen weitgehend befreite Gasstrom dann zumindest teilweise entlang des Wärmeleitelements und gibt in ihm enthaltene Wärme an das Wärmeleitelement ab, welches diese Wärme in den Sammelbereich und die dort angesammelte Flüssigkeit einleitet. Wärme wird also sowohl von den abgeschiedenen Flüssigkeitströpfchen als auch von dem Wärmeleitelement in den Sammelbereich transportiert. Dieser kann damit ohne eine externe Beheizung oder die Anbindung an elektrische Heizelemente einen von einem Heizmedium durchströmten Wärmetauscher oder dergleichen, welche ergänzend natürlich selbstverständlich auch weiterhin möglich und denkbar sind, passiv bereits sehr gut erwärmt werden. Das fest werden der Flüssigkeit, beispielsweise wenn es sich dabei um Wasser handelt, die Eisbildung, kann somit weitgehend verhindert oder, gegenüber den Aufbauten aus dem Stand der Technik, zumindest deutlich reduziert werden.

Gemäß einer außerordentlich günstigen Weiterbildung der Idee ist es dabei vorgesehen, dass das Wärmeleitelement mit dem Prallelement verbunden ist, sodass in jedem Fall der größte Teil der Gasströmung oder vorzugsweise die gesamte Gasströmung mit dem Wärmeleitelement in Kontakt kommt und Wärme an das Wärmeleitelement abgeben kann.

Dabei hat sich gezeigt, dass dieser Aufbau mit dem bis zum Prallelement ragenden Wärmeleitelement und der entsprechenden Ausgestaltung mit gut wärmeleitendem Wärmeleitelement und schlecht wärmeleitendem Prallelement besonders günstig hinsichtlich der Weiterleitung der Wärme in den Sammelbereich ist. Durch die Verbindung wird sichergestellt, dass weitgehend der gesamte Volumenstrom des Gases mit dem Wärmeleitelement in Kontakt kommt. Andererseits wird es dadurch, dass es vom Prallelement in seinem Material und in seiner Wärmeleitfähigkeit unterschiedlich ausgeführt ist, erreicht, dass das Wärmeleitelement deutlich kürzer in seiner Gesamtlänge ausgestaltet werden kann, als wenn es das Prallelement mit umfassen würde. Dadurch wird eine gute Weiterleitung der Wärme über eine relativ kurze Strecke in den Sammelbereich gewährleistet. Wäre das Prallelement ebenfalls aus Metall mit guter Wärmeleitfähigkeit, dann würde unterwegs Wärme bereits wieder an den Gasstrom abgegeben werden, welche zuvor aufgenommen worden ist und/oder den flüssigen Tröpfchen entzogen worden war. Der Wärmeeintrag in den Sammelbereich, welcher das eigentliche Ziel des Aufbaus ist, wäre dadurch erheblich schlechter als beim beschriebenen Aufbau mit gut wärmeleitendem Wärmeleitelement und schlechter wärmeleitendem Prallelement. Besonders günstig wird dies insbesondere dann, wenn die Elemente entsprechend dem nachfolgend beschriebenen Aufbau ausgebildet sind.

Gemäß einer außerordentlich günstigen Weiterbildung des erfindungsgemäßen Flüssigkeitsabscheiders ist es nämlich vorgesehen, dass das Wärmeleitelement aus Metall, vorzugsweise aus einer gut wärmeleitenden Metalllegierung, beispielsweise einer Aluminiumlegierung, hergestellt ist. Das Prallelement kann aus Kunststoff ausgebildet sein, welcher dementsprechend eine deutlich schlechtere Wärmeleitung als das Metall des Wärmeleitelements aufweist. Damit lässt sich der oben beschriebene Vorteil ideal nutzen.

Eine weitere sehr vorteilhafte Ausgestaltung der Variante des Flüssigkeitsabscheiders, bei dem das Wärmeleitelement mit dem Prallelement verbunden ist, kann es ferner vorsehen, dass das Wärmeleitelement zweiteilig ausgeführt ist. Es besteht dann beispielsweise aus einem Blech, welches im Bereich des Sammelbereichs angeordnet ist, und aus einem Verbindungselement zwischen diesem Wärmeleitblech und dem Prallelement. Dieses Verbindungselement kann beispielsweise über eine Steck- oder Clipverbindung mit dem Prallelement verbunden sein.

Eine weitere sehr günstige Ausgestaltung des erfindungsgemäßen Flüssigkeitsabscheiders sieht es dabei ferner vor, dass das Wärmeleitelement, oder gemäß der eben beschriebenen Ausführungsvariante zumindest das Verbindungselement, eine oder mehrere Platten aufweist, welche in der Fläche kleiner als der durchströmbare Querschnitt des Volumens sind. Durch diesen Aufbau ist es möglich, mit massiven Platten als Wärmeleitelemente auszukommen. Diese massiven Platten sind dann in der Lage, relativ viel Wärme aufzunehmen. Sie sind so gestaltet, dass sie einen Großteil, nicht jedoch den ganzen Querschnitt für die Strömung des Gases einnehmen. Das Gas muss dann entlang dieser Platten strömen, wird entsprechend umgelenkt und strömt dann aus dem Flüssigkeitsabscheider ab. Dadurch wird ein idealer Wärmeeintrag in die Platten des Wärmeleitelements einerseits erzielt und andererseits wird durch die erneute Umlenkung der Gasströmung beim Umströmen der Platten eventuell noch vorhandene Restflüssigkeit in dem Gas abgeschieden.

Das Wärmeleitelement oder bei dem oben genannten Aufbau vorzugsweise wieder das Verbindungselement des Wärmeleitelements können dabei auch eine gelochte Platte, Stäbe, Gitter oder dergleichen aufweisen. Diese erlauben einerseits eine Anordnung in der Strömung des Gases, sodass Wärme von diesem aufgenommen werden kann und anderseits eine entsprechende Durchlässigkeit für das Gas, sodass sie den gesamten Querschnitt quasi "ausfüllen" können, was konstruktiv und hinsichtlich des Einbaus entsprechend einfach ist und andererseits durch die Löcher, die Gitterstruktur oder den Abstand zwischen den Stäben, welche auch als sich kreuzende und sich in den Kreuzungspunkten berührende Stäbe ausgebildet sein können, das Gas zuverlässig passieren lassen.

Eine weitere sehr günstige Ausgestaltung des erfindungsgemäßen Flüssigkeitsabscheiders kann es darüber hinaus vorsehen, dass ein Gehäuse des Flüssigkeitsabscheiders um das innere Volumen herum und das Prallelement einteilig ausgeführt sind. Dieser Aufbau ist besonders einfach und effizient in der Herstellung und der Montage. Er kann es beispielsweise vorsehen, dass sowohl das Prallelement als auch das Gehäuse aus Kunststoff realisiert sind. Dies kann dann beispielsweise als relativ einfach zu realisierendes Spritzgussteil aufgebaut sein, in welches das Wärmeleitelement beispielsweise in Form eines Blechs eingeclippt oder in diesem Gehäuse festgeschraubt wird, um die oben beschriebene Funktionalität zu erfüllen und vorzugsweise den Sammelbereich mit dem Prallelement zu verbinden.

Eine weitere außerordentlich günstige Ausgestaltung des erfindungsgemäßen Flüssigkeitsabscheiders kann es ferner vorsehen, dass genau ein Prallelement in dem inneren Volumen vorgesehen ist. Dieser Aufbau mit nur einem einzigen Prallelement ist für viele Anwendungen wie beispielsweise das Abscheiden von Wasser im Anodenkreislauf eines Brennstoffzellensystems bei geeigneter Konstruktion ausreichend und kann somit einen außerordentlich einfachen, kompakten und in der Herstellung kostengünstigen Aufbau gewährleisten.

Eine weitere sehr vorteilhafte Variante des erfindungsgemäßen Flüssigkeitsabscheiders kann es ergänzend vorsehen, dass der Sammelbereich über ein Ablassventil mit der Umgebung oder einer weiteren Komponente verbunden ist. Ein solches Ablassventil, insbesondere wenn es im direkten Anschluss an den Sammelbereich, gegebenenfalls noch integriert oder zumindest thermisch angebunden an den Flüssigkeitsabscheider und den Sammelbereich ausgebildet ist, hat den weiteren Vorteil, dass hierdurch ein relativ großes, schweres und eine hohe Wärmekapazität aufweisendes Bauteil am Sammelbereich angeordnet ist. Dieses kann von der Erwärmung über das Wärmeleitelement ebenso profitieren - um ein Einfrieren zu verhindern - und hilft die Wärme in diesem Bereich bis zu einem gewissen Grad zu speichern. Außerdem erlaubt es ein gezieltes Ablassen der Flüssigkeit beispielsweise in Abhängigkeit eines Füllstandes, welcher gemessen, aus einer Simulation berechnet oder auf ähnliche Art und Weise ermittelt worden ist.

Der erfindungsgemäße Flüssigkeitsabscheider lässt sich nun entsprechend einfach und effizient realisieren und herstellen. Er ist insbesondere in der Lage, im Betrieb einer Anlage, in die er integriert worden ist, einen Betrieb ohne zusätzliche Beheizung auch bei widrigen äußeren Bedingungen sicherzustellen, da durch die Weiterleitung der Wärme in den Bereich, in dem sich die Flüssigkeit sammelt, ein Erstarren dieser Flüssigkeit weitgehend ausgeschlossen werden kann. Dies gilt beispielsweise auch bei Wasser, insbesondere bei Reinstwasser, welches sehr anfällig gegen ein Einfrieren bereits bei Temperaturen um den Gefrierpunkt ist. Durch den Aufbau mit dem Wärmeleitelement und die Erwärmung des Sammelbereichs kann ein solches zuverlässig verhindert werden. Der erfindungsgemäße Flüssigkeitsabscheider eignet sich deshalb insbesondere als Wasserabscheider und hier insbesondere als Wasserabscheider im Abgasstrom einer Brennstoffzelle, in welcher als Produktwasser der Brennstoffzelle reines Wasser entsteht, welches entsprechend anfällig gegen ein Einfrieren ist. Ist die Brennstoffzelle beispielsweise als Brennstoffzellensystem in einem Fahrzeug installiert, in welchem sie elektrische Leistung liefert, dann können Situationen, bei denen das Fahrzeug bei Temperaturen unterhalb des Gefrierpunkts unterwegs ist, nicht ausgeschlossen werden. Daher eignet sich der erfindungsgemäße Flüssigkeitsabscheider insbesondere für derartige Anwendungen, ist jedoch in seiner Anwendung nicht hierauf eingeschränkt. Weitere vorteilhafte Ausgestaltungen des erfindungsgemäßen Flüssigkeitsabscheiders und seiner Verwendung ergeben sich auch aus dem Ausführungsbeispiel, welches nachfolgend unter Bezugnahme auf die Figuren näher beschrieben ist.

Dabei zeigen:
- Fig. 1: ein beispielhaftes Fahrzeug mit einem Brennstoffzellensystem, welches einen Flüssigkeitsabscheider gemäß der Erfindung als Wasserabscheider aufweist; und
- Fig. 2: einen Querschnitt durch einen möglichen Aufbau des Flüssigkeitsabscheiders gemäß der Erfindung.

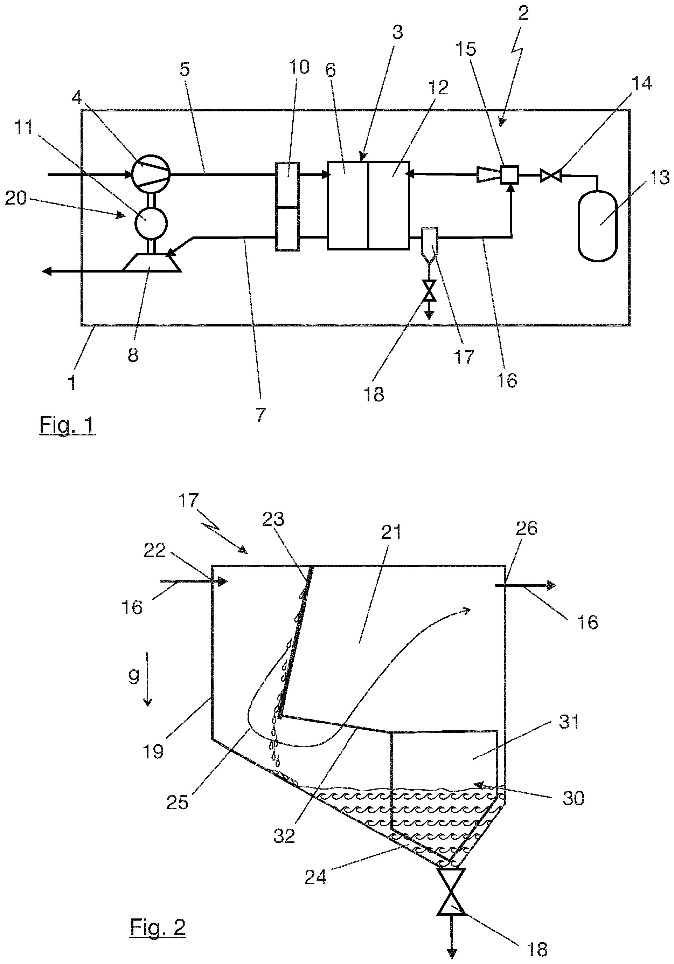

In der Darstellung der Fig. 1 ist ein sehr stark schematisiert angedeutetes Fahrzeug 1 zu erkennen, welches ein Brennstoffzellensystem 2 aufweisen soll, welches zur Bereitstellung von elektrischer Leistung, insbesondere zur Bereitstellung von elektrischer Antriebsleistung für das Fahrzeug, vorgesehen ist. Den Kern des Brennstoffzellensystems 2 bildet dabei eine Brennstoffzelle 3, welche typischerweise als Stapel von Einzelzellen ausgebildet ist. Der Aufbau wird nachfolgend auch als Brennstoffzellenstapel oder Brennstoffzellenstack bezeichnet. Er kann beispielsweise mit protonenleitenden Membranen als Elektrolyt ausgebildet sein, also sogenannte PEM-Brennstoffzellen aufweisen. Der Brennstoffzellenstapel 3 wird auf seiner Kathodenseite 6 mit Luft aus einer Luftfördereinrichtung 4, beispielsweise einem Strömungsverdichter versorgt, welcher über eine Zuluftleitung 5 und einen Gas/Gas-Befeuchter 10 in dem hier dargestellten Ausführungsbeispiel in die Kathodenseite 6 des Brennstoffzellenstapels 3 strömt. Über eine Abluftleitung 7 strömt die an Sauerstoff abgereicherte Luft wiederum durch den Gas/Gas-Befeuchter 10 aus der Kathodenseite 6 des Brennstoffzellenstapels 3 ab. Feuchtigkeit wird dabei über den Befeuchter 10 an die Zuluft in der Zuluftleitung 5 abgegeben. Die Abluft gelangt dann in eine Abluftturbine 8, in welcher sie entspannt wird, um Wärmeenergie und Druckenergie zurückzugewinnen. Eine elektrische Maschine 11 steht in Wirkverbindung mit dieser Abluftturbine 8 einerseits und dem Strömungsverdichter 4 andererseits. Dieser Aufbau, welcher auch als elektrischer Turbolader 20 oder motorunterstützter Turbolader bezeichnet wird, dient zur effizienten Luftversorgung des Brennstoffzellensystems 2 und ist soweit aus dem Stand der Technik bekannt, als dass auf ihn nicht weiter eingegangen werden muss.

Eine Anodenseite 12 des Brennstoffzellenstapels 3 wird mit Wasserstoff aus einem Druckgasspeicher 13 über ein Druckregel- und Dosierventil 14 versorgt. Nicht verbrauchter Wasserstoff gelangt über eine Rezirkulationsleitung 16 aus der Anodenseite 12 des Brennstoffzellenstapels 3 zurück zu einer Gasstrahlpumpe 15 als Rezirkulationsfördereinrichtung und wird vermischt mit frischem Wasserstoff, welcher auch als Treibstrahl für die Gasstrahlpumpe 15 dient, der Anodenseite 12 erneut zugeführt. Alternativ oder ergänzend zu dieser Gasstrahlpumpe 15 könnte hier auch ein Rezirkulationsgebläse vorgesehen sein. In der Rezirkulationsleitung 16 bzw. in dem als Anodenloop bezeichneten Aufbau zur Rezirkulation von nicht verbrauchtem Wasserstoff befindet sich nun ein Flüssigkeitsabscheider 17, welcher über ein Ablassventil 18 in dem hier dargestellten Ausführungsbeispiel mit der Umgebung verbunden ist. Genauso gut wäre eine Anbindung beispielsweise an die Abluftleitung 7 vor oder insbesondere nach der Abluftturbine 8 denkbar. All dies ist einem Fachmann für Brennstoffzellensysteme soweit klar, sodass hierauf nicht weiter eingegangen werden muss.

Nachfolgend soll nun insbesondere der Flüssigkeitsabscheider bzw. Wasserabscheider 17 näher beschrieben werden. In der Darstellung der Fig. 2 ist sein Aufbau in einem Querschnitt schematisch dargestellt. Der Wasserabscheider 17, ein mit 19 bezeichnetes Gehäuse, welches beispielsweise als Spritzgussteil aus Kunststoff hergestellt sein soll. In direktem Kontakt mit dem Gehäuse 19, welches ein inneres Volumen 21 umgibt, befindet sich das Ablassventil 18. Für die Funktionalität des Flüssigkeitsabscheiders 17 entscheidend ist es nun, dass auf eine Einströmungsöffnung 22, welcher mit der Rezirkulationsleitung 16 stromaufwärts verbunden ist, ein Prallelement 23 folgt, welches den gesamten angeströmten Querschnitt für den mit Flüssigkeit beladenen Gasstrom aus der Rezirkulationsleitung 16 versperrt. Dieses Prallelement 23 kann vorzugsweise einteilig mit dem Gehäuse 19 und ebenfalls aus Kunststoff ausgebildet sein. Die mit den flüssigen Tröpfchen beladene Strömung, welche aus der Rezirkulationsleitung 16 durch die Einströmöffnung 22 in das innere Volumen 21 einströmt, prallt also gegen dieses Prallelement 23 und wird scharf umgelenkt. In ihr enthaltenes Wasser sammelt sich an dem Prallelement 23 und tropft, wie es hier dargestellt ist, in Richtung der Schwerkraft g im bestimmungsgemäßen Einsatz des Flüssigkeitsabscheiders 17 nach unten und entlang eines Teils des Gehäuses 19 in einen unterhalb des von dem Gas durchströmten Teils des inneren Volumens 21 in diesem angeordneten Sammelbereich 24, welcher mit dem Ablassventil 18 in Verbindung steht. Das ganz oder weitgehend von der Flüssigkeit befreite Gas strömt dann entsprechend des mit 25 bezeichneten Pfeils durch das innere Volumen 21 des Flüssigkeitsabscheiders 17 und durch eine Ausströmöffnung 26 stromaufwärts wieder in die Rezirkulationsleitung 16 ab.

In dem Sammelbereich 24 und diesen in Richtung der Gasströmung gemäß des Pfeils 25 überragend, befindet sich nun ein Wärmeleitelement 30, welches beispielsweise aus einer Aluminiumlegierung hergestellt ist. Es besteht aus einem ersten Blech 31, welches zumindest teilweise in dem Sammelbereich 24 angeordnet ist und in die sich dort sammelnde Flüssigkeit, welche hier durch einen Flüssigkeitspegel angedeutet ist, ragt. Ein Verbindungselement 32 ebenfalls aus einer Aluminiumlegierung und vorzugsweise einteilig mit dem Blech 31 ausgeführt oder zumindest sehr gut wärmeleitend mit diesem verbunden, beispielsweise verschweißt, ist, ragt in Richtung des Prallelements 23 und ist vorzugsweise mit diesem mechanisch verbunden, beispielsweise verclippt, vernietet, verschraubt, verklebt oder dergleichen. Das Verbindungselement 32 kann prinzipiell als Lochblech ausgeführt sein, als eine gewisse Anzahl von Stäben, als Gitter oder dergleichen. Auch der Aufbau aus einer oder mehreren Platten, welche den Strömungsquerschnitt des inneren Volumens 21 senkrecht zur Zeichnungsebene weitgehend oder nicht ganz versperren, ist denkbar. Bei mehreren Prallelementen 23 wären dementsprechend auch mehrere Verbindungselemente 32 oder ein diese alle miteinander verbindendes Verbindungselement 32 denkbar.

Das Verbindungselement 32 und teilweise auch die Platte 31 des Wärmeleitelements 30 nehmen nun Wärme des gemäß dem Pfeil 25 strömenden Gasstroms auf. Zusammen mit der Wärme, welche in den flüssigen Tröpfchen verbleibt, da das Prallelement 23 aus Kunststoff und damit schlecht wärmeleitend ist, führt dies dazu, dass auf relativ kurzen Wegen des Wärmeleitelements 30 Wärme in den Sammelbereich 24 eingeleitet wird und zwar zusätzlich zu der Wärme, welche in der Flüssigkeit selbst bereits enthalten ist. Dies führt im Betrieb des Flüssigkeitsabscheiders bzw. Wasserabscheiders 17 zu einer sehr guten Erwärmung der Flüssigkeit in dem Sammelbereich 24, sodass die Gefahr einer Eisbildung vermieden oder zumindest minimiert werden kann.

## Patentansprüche

1. Flüssigkeitsabscheider (17) für einen mit Flüssigkeit beladenen Gasstrom, mit einem inneren Volumen (21), welches wenigstens ein Prallelement (23) und einen Sammelbereich (24) für die abgeschiedene Flüssigkeit aufweist,
**dadurch gekennzeichnet, dass**
im Sammelbereich (24) ein Wärmeleitelement (30) aus einem gut wärmeleitenden Material angeordnet ist, welches in Richtung des wenigstens einen Prallelements (23) in die Gasströmung (25) in dem inneren Volumen (21) ragt, wobei das Prallelement (23) aus einem die Wärme schlechter leitenden Material als das Wärmeleitelement (30) ausgebildet ist.

2. Flüssigkeitsabscheider (17) nach Anspruch 1,
**dadurch gekennzeichnet, dass**
das Wärmeleitelement (30) und das wenigstens eine Prallelement (23) miteinander verbunden sind.

3. Flüssigkeitsabscheider (17) nach Anspruch 1 oder 2,
**dadurch gekennzeichnet, dass**
das Wärmeleitelement (30) aus Metall und das wenigstens eine Prallelement (23) aus Kunststoff ausgebildet sind.

4. Flüssigkeitsabscheider (17) nach Anspruch 2 oder 3,
**dadurch gekennzeichnet, dass**
das Wärmeleitelement (30) aus einem Blechelement (31) und einem Verbindungselement (32) zu dem wenigstens einen Prallelement (23) ausgebildet ist.

5. Flüssigkeitsabscheider (17) nach einem der Ansprüche 1 bis 4,
**dadurch gekennzeichnet, dass**
das Wärmeleitelement (30) eine oder mehrere Platten aufweist, welche in der Fläche kleiner als der durchströmbare Querschnitt des inneren Volumens (21) sind.

6. Flüssigkeitsabscheider (17) nach einem der Ansprüche 1 bis 5,
**dadurch gekennzeichnet, dass**
das Wärmeleitelement (30) wenigstens eine gelochte Platte, mehrere Stäbe und/oder wenigstens ein Gitter aufweist.

7. Flüssigkeitsabscheider (17) nach einem der Ansprüche 1 bis 6,
**dadurch gekennzeichnet, dass**
ein Gehäuse (19) um das innere Volumen (21) und das wenigstens eine Prallelement (23) einteilig ausgebildet sind.

8. Flüssigkeitsabscheider (17) nach einem der Ansprüche 1 bis 7,
**dadurch gekennzeichnet, dass**
genau ein Prallelement (23) vorgesehen ist.

9. Flüssigkeitsabscheider (17) nach einem der Ansprüche 1 bis 8,
**dadurch gekennzeichnet, dass**
der Sammelbereich (24) ein Ablassventil (18) aufweist oder direkt mit diesem verbunden ist, über welches der Sammelbereich (24) mit der Umgebung oder einer weiteren Komponente schaltbar verbunden ist.

10. Verwendung des Flüssigkeitsabscheiders (17) nach einem der Ansprüche 1 bis 9 als Wasserabscheider in einem Abgasstrom eines Brennstoffzellensystems (2).

## Claims

1. A liquid separator (17) for a gas flow charged with liquid, having an inner volume (21), which has at least one baffle element (23) and a collection area (24) for the separated liquid,
**characterized in that**
a heat-conducting element (30) made of a material with good heat conductivity is arranged in the collection area (24) and protrudes in the direction of the at least one baffle element (23) into the gas flow (25) in the inner volume (21), wherein the baffle element (23) is made from a material which conducts heat less well than the heat-conducting element (30).

2. The liquid separator (17) as claimed in claim 1,
**characterized in that**
the heat-conducting element (30) and the at least one baffle element (23) are connected to one another.

3. The liquid separator (17) as claimed in claim 1 or 2,
**characterized in that**
the heat-conducting element (30) is made of metal and the at least one baffle element (23) is made of plastic.

4. The liquid separator (17) as claimed in claim 2 or 3,
**characterized in that**
the heat-conducting element (30) is made of a metal sheet element (31) and a connection element (32) to the at least one baffle element (23).

5. The liquid separator (17) as claimed in any one of claims 1 to 4,
**characterized in that**
the heat-conducting element (30) has one or more plates, which are smaller in area than the cross section of the inner volume (21) through which flow can take place.

6. The liquid separator (17) as claimed in any one of claims 1 to 5,
**characterized in that**
the heat-conducting element (30) has at least one perforated plate, multiple rods, and/or at least one grid.

7. The liquid separator (17) as claimed in any one of claims 1 to 6,
**characterized in that**
a housing (19) around the inner volume (21) and the at least one baffle element (23) are made in one piece.

8. The liquid separator (17) as claimed in any one of claims 1 to 7,
**characterized in that**
exactly one baffle element (23) is provided.

9. The liquid separator (17) as claimed in any one of claims 1 to 8,
**characterized in that**
the collection area (24) has a drain valve (18) or is connected directly thereto, via which the collection area (24) is switchably connected to the environment or a further component.

10. A use of the liquid separator (17) as claimed in any one of claims 1 to 9 as a water separator in an exhaust gas flow of a fuel cell system (2).

## Revendications

1. Séparateur de liquide (17) pour un courant de gaz chargé en liquide, avec un volume interne (21) qui présente au moins un élément d'impact (23) et une zone de collecte (24) pour le liquide séparé,
**caractérisé en ce que**
un élément caloporteur (30) en un matériau bon conducteur de chaleur est agencé dans la zone de collecte (24), lequel pénètre en direction de l'au moins un élément d'impact (23) dans l'écoulement de gaz (25) dans le volume interne (21), dans lequel l'élément d'impact (23) est réalisé en un matériau moins bon conducteur de chaleur que l'élément caloporteur (30).

2. Séparateur de liquide (17) selon la revendication 1, **caractérisé en ce que**
l'élément caloporteur (30) et l'au moins un élément d'impact (23) sont reliés l'un à l'autre.

3. Séparateur de liquide (17) selon la revendication 1 ou 2,
**caractérisé en ce que**
l'élément caloporteur (30) est réalisé en métal et l'au moins un élément d'impact (23) est réalisé en matière plastique.

4. Séparateur de liquide (17) selon la revendication 2 ou 3,
**caractérisé en ce que**
l'élément caloporteur (30) est réalisé à partir d'un élément de tôle (31) et d'un élément de liaison (32) avec l'au moins un élément d'impact (23).

5. Séparateur de liquide (17) selon l'une quelconque des revendications 1 à 4,
**caractérisé en ce que**
l'élément caloporteur (30) présente une ou plusieurs plaques qui sont en superficie plus petites que la section transversale pouvant être traversée du volume interne (21).

6. Séparateur de liquide (17) selon l'une quelconque des revendications 1 à 5,
**caractérisé en ce que**
l'élément caloporteur (30) présente au moins une plaque perforée, plusieurs barres et/ou au moins une grille.

7. Séparateur de liquide (17) selon l'une quelconque des revendications 1 à 6,
**caractérisé en ce que**
un boîtier (19) est réalisé autour du volume interne (21) et l'au moins un élément d'impact (23) est réalisé en une partie.

8. Séparateur de liquide (17) selon l'une quelconque des revendications 1 à 7,
**caractérisé en ce que**
précisément un élément d'impact (23) est prévu.

9. Séparateur de liquide (17) selon l'une quelconque des revendications 1 à 8,
**caractérisé en ce que**
la zone de collecte (24) présente une soupape de décharge (18) ou est directement reliée à celle-ci, par le biais de laquelle la zone de collecte (24) est reliée de manière commutable à l'environnement ou à un autre composant.

10. Utilisation du séparateur de liquide (17) selon l'une quelconque des revendications 1 à 9 comme séparateur d'eau dans un courant de gaz d'échappement d'un système de pile à combustible (2).
